# EUROPEAN PATENT SPECIFICATION

(11) **EP 2 313 999 B1**
(45) Date of publication and mention of the grant of the patent: **28.05.2014**
(21) Application number: 09806938.8
(22) Date of filing: 05.08.2009
(51) Int. Cl.: H04B 15/00, H04S 7/00

(54) **SYSTEM AND METHOD FOR SOUND FIELD WIDENING AND PHASE DECORRELATION**
SYSTEM UND VERFAHREN ZUR BASISBREITENERWEITERUNG UND PHASENDEKORRELATION
SYSTÈME ET PROCÉDÉ D'ÉLARGISSEMENT DU CHAMP SONORE ET DE DÉCORRÉLATION DE PHASE

(30) Priority: 14.08.2008 US 191669
(43) Date of publication of application: 27.04.2011
(73) Proprietor: DTS, Inc., Calabasas, CA 91302 (US)
(72) Inventor: JOHNSTON, James, D., Redmond WA 98052 (US)
(74) Representative: Müller, Wolfram Hubertus
(86) International application number: PCT/US2009/004478
(87) International publication number: WO 2010/019192

(56) References cited:
- US-A- 5 144 569
- US-A- 5 671 287
- US-A- 5 694 088
- US-A- 6 111 958
- US-A1- 2002 154 783
- US-B1- 6 175 631
- US-B1- 6 411 653
- ALI M: "Stereophonic acoustic echo cancellation system using time-varying all-pass filtering for signal decorrelation", ACOUSTICS, SPEECH AND SIGNAL PROCESSING, 1998. PROCEEDINGS OF THE 1998 IEEE INTERNATIONAL CONFERENCE ON SEATTLE, WA, USA 12-15 MAY 1998, NEW YORK, NY, USA,IEEE, US, vol. 6, 12 May 1998 (1998-05-12), pages 3689-3692, XP010279511, DOI: 10.1109/ICASSP.1998.679684 ISBN: 978-0-7803-4428-0

## Description

### FIELD OF THE INVENTION

The present invention relates to systems and methods for processing signals, and more specifically to a system and method for time-domain decorrelation for sound field widening, elimination of audio artifacts and other suitable purposes.

### BACKGROUND OF THE INVENTION

Systems and methods for processing signals are known in the art. Decorrelation in particular has been achieved in a variety of ways, both by all pass filter and by filters containing both frequency and phase shaping. In the past, all pass filters have been used to decorrelate signals to some extent, however with uncompensated inter-channel delay and without an ability to change the amount of decorrelation in a simple fashion.

US 6,111,958 describes a system that emphasizes dissimilarity between a left channel and a right channel by (i) boosting the level of the dissimilar components, (ii) providing spectral equalization to enhance the perception of breadth, and (iii) injecting an equalized, attenuated and inverted version of the dissimilar component into the opposite channel to broaden the components stereo image. The system shall avoid spectral coloration by providing a generally fiat transfer function from input to output. Interchannel dissimilarity is estimated by performing a first order comparison of the left and right input signals. The comparison may be implemented by a peak detector on a L-R signal, a cross-correlation procedure, or some other scheme. A feedback mechanism may alter the equalization characteristics of the signals in a manner that is responsive to the dissimilarity of the output signals. If the input signal is a monophonic signal, the system decorrelates the mono signal using cascades of all pass filters to generate a pseudo-stereo signal prior to spatial broadening.

US 2002/0154783 A1 discloses a sound reproduction system that comprises a left and right speakers located in close proximity, and a sound processor which provides audio signals to the pair of speakers. The sound processor derives a cancellation signal from the difference between the left and right channels. The resulting difference signal is scaled, delayed (if necessary), and spectrally modified before being added to the left channel and, in opposite polarity, to the right channel. The spectral modification to the difference channel takes the form of a low-frequency boost over a specified frequency range, in order to restore the correct timbral balance after the differencing process. Additional phase-compensating all-pass networks may be inserted in the difference channel to correct for any extra phase shift contributed by the spectral modifying circuit.

### SUMMARY OF THE INVENTION

A system and method are provided that create a varying phase shift as a function of frequency for different channels of audio data to eliminate phase correlations between channels of audio data.

In particular, a system and method are provided that can be used to widen the perceived sound field, eliminate audio artifacts and perform other suitable functions by eliminating undesired time-domain correlations between channels of audio data.

In accordance with an exemplary embodiment of the invention, a system for decorrelating signals is provided. The system includes a first all pass filter, having a first delay length, processing a first signal. A second all pass filter, having a second delay length, is connected to the first all pass filter and processes the first signal after processing by the first all pass filter. A third all pass filter, having a third delay length, processes a second signal. A fourth all pass filter, having a fourth delay length, is connected to the third all pass filter and processes the second signal after processing by the third all pass filter. The first delay length, the second delay length, the third delay length and the fourth delay length each have a unique value, and the sum of the first delay length and the second delay length is equal to the sum of the third delay length and the fourth delay length.

Those skilled in the art will further appreciate the advantages and superior features of the invention together with other important aspects thereof on reading the detailed description that follows in conjunction with the drawings.

### BRIEF DESCRIPTION OF THE DRAWINGS

FIGURE 1 is a diagram of a system for sound field widening and phase decorrelation in accordance with an exemplary embodiment of the present invention;
FIGURE 2 is a diagram of a system for multi-channel phase decorrelation in accordance with an exemplary embodiment of the present invention;
FIGURE 3 is a diagram of a system for performing sound field widening and phase decorrelation in accordance with an exemplary embodiment of the present invention;
FIGURE 4 is a diagram of a method for processing a plurality of channels of audio data to decorrelate phase in accordance with an exemplary embodiment of the present invention;
FIGURE 5 is a diagram of a system for performing phase modification of an audio channel in accordance with an exemplary embodiment of the present invention;
FIGURE 6 is a diagram of a system for performing phase decorrelation and sound field widening in accordance with an exemplary embodiment of the present invention; and
FIGURE 7 is a diagram of a system for sound field widening and phase decorrelation with phase modulation in accordance with an exemplary embodiment of the present invention.

### DETAILED DESCRIPTION OF PREFERRED EMBODIMENTS

In the description which follows, like parts are marked throughout the specification and drawing with the same reference numerals, respectively. The drawing figures may not be to scale and certain components may be shown in generalized or schematic form and identified by commercial designations in the interest of clarity and conciseness.

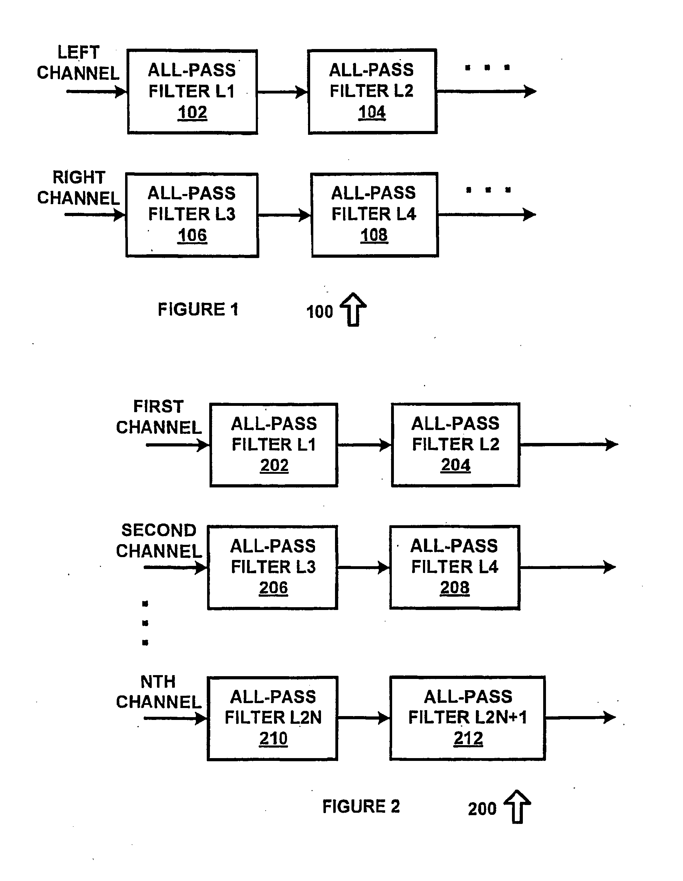

**FIGURE 1** is a diagram of a system 100 for sound field widening and phase decorrelation in accordance with an exemplary embodiment of the present invention. System 100 can be used to increase the perceived width of a sound field by phase decorrelation of the audio channel signals being processed.

System 100 includes all pass filter L1 102, all pass filter L2 104, all pass filter L3 106 and all pass filter L4 108, each of which can be implemented in hardware, software, or a suitable combination of hardware and software, and can be one or more software systems operating on a general purpose processing platform. As used herein, "hardware" can include a combination of discrete components, an integrated circuit, an application-specific integrated circuit, a field programmable gate array, or other suitable hardware. As used herein, "software" can include one or more objects, agents, threads, lines of code, subroutines, separate software applications, two or more lines of code or other suitable software structures operating in two or more software applications or on two or more processors, or other suitable software structures. In one exemplary embodiment, software can include one or more lines of code or other suitable software structures operating in a general purpose software application, such as an operating system, and one or more lines of code or other suitable software structures operating in a specific purpose software application.

All pass filter L1 102 is coupled to all pass filter L2 104, and all pass filter L3 106 is coupled to all pass filter L4 108. As used herein, the term "coupled" and its cognate terms such as "couples" or "couple," can include a physical connection (such as a wire, optical fiber, or a telecommunications medium), a virtual connection (such as through assigned memory locations of a data memory device or a hypertext transfer protocol (HTTP) link), a logical connection (such as through one or more semiconductor devices in an integrated circuit), or other suitable connections.

System 100 receives left channel audio data and right channel audio data, which can be a series of digital time domain samples of audio data or other suitable audio data. The left channel audio data is provided to all pass filter L1 102, which has a delay length of L1. In one exemplary embodiment, where the audio data is digital time domain samples of an audio signal, the delay length L1 can be equal to the number of samples in the delay element of all pass filter L1 102. After the left channel audio data is processed with all pass filter L1 102, the processed data is then provided to all pass filter L2 104, which has a delay length L2 that is different from delay length L1. The processed left channel audio data is then output, such as to speakers, for recording, or for other suitable applications.

The right channel audio data is likewise provided to all pass filter L3 106, which has a delay length L3 that is not equal to either delay length L1 or L2. The processed right channel data is then provided to all pass filter L4 108, which has a delay length L4 that is not equal to any of delay lengths L1, L2 or L3. The processed right channel data is then output, such as to speakers, for recording, transmission, rendering in headphones or for other suitable applications.

In one exemplary embodiment, all pass filter L1 102, all pass filter L2 104, all pass filter L3 106 and all pass filter L4 108 can each be sparse Nth order pole zero filters having an impulse response that is determined by the filter coefficients. The delay lengths of all pass filter L1 102, all pass filter L2 104, all pass filter L3 106 and all pass filter L4 108 are selected so that the total delay length of a signal processed by all pass filter L1 102 and all pass filter L2 104 is the same as the total delay length of a signal processed by all pass filter L3 106 and all pass filter L4 108. In one exemplary embodiment, the delay lengths of all pass filter L1 102 and all pass filter L3 106 can be a first prime pair, and the delay lengths of all pass filter L2 104 and all pass filter L4 108 can be a second prime pair, such that the total length of the all pass filters can be set to an equal value by selection of suitable prime pairs. In one exemplary embodiment, the delay lengths of the first prime pair can be 41 and 43 and the delay lengths of the second prime pair can be 71 and 73, such that all pass filter L1 102 can have a delay length of 41 and all pass filter L2 104 can have a delay length of 73, and all pass filter L3 106 can have a delay length of 43 and all pass filter L4 108 can have a delay length of 71. In this manner, the overall processing delay for both the left channel audio data (41 + 73) and the right channel audio data (43 + 71) will be equal (114).

In operation, the all pass filters create a phase shift in the left channel audio data and right channel audio data that depends on the frequency and the length of the all pass filters. Because the phase shift created by each all pass filter is different, any pre-existing phase correlations between the left channel audio data and the right channel audio data will be eliminated, which results in the apparent widening of the sound field to a listener, such as when the signals are amplified and transmitted over loudspeakers. Because correlation between the phase of individual frequency bins can result in the apparent location of that frequency bin as being in the center between the left and right channel speaker, decorrelation of such frequencies will widen the apparent sound field. In other words, correlation in phase results in a collapse of the sound field towards the center of the left and right channel speaker, whereas decorrelation in phase avoids the collapse of the sound field towards the center of the left and right channel speaker. Additional all pass filters can also or alternatively be utilized to create additional phase decorrelation, where suitable.

Furthermore, it is possible to connect two different pairs of sections to each channel, and to modulate the filter coefficients while keeping the coefficients for one pair in quadrature with those of the other pair, so as to modulate the decorrelation by a third signal, creating a time-varying change in the phase shifts. This third signal can be a sine wave of low frequency, a narrowband noise signal of low frequency or other suitable signals, such that reflection and cancellation patterns within a room or a listening environment are made to move about the room in a fashion preventing the human auditory system from strongly noticing the cancellations or reflections.

**FIGURE 2** is a diagram of a system 200 for multi-channel phase decorrelation in accordance with an exemplary embodiment of the present invention. System 200 can be implemented in hardware, software or a suitable combination of hardware and software, and can be one or more software systems operating on a general purpose processing platform. This system can be accordingly made time varying in the same fashion as above.

System 200 includes a plurality of channels of audio data from first audio channel, second audio channel, to an Nth audio channel. All pass filter L1 202 having a delay length of L1 and all pass filter L2 204 having a delay length of L2 are used to process the first audio channel, and all pass filter L3 206 having a delay length of L3 and all pass filter L4 208 having a delay length of L4 are used to process the second audio channel. Likewise, each additional audio channel is processed by different all pass filters having different delay lengths, until the last or Nth audio channel is processed by all pass filter L2N 210 having a delay length of L2N and all pass filter L2N+1 212 having a delay length of L2N+1. The individual delay lengths of each of the all pass filters are different, but the total delay length of each channel is equal. In this manner, the phase shift applied to each of the individual frequency bins of each channel of audio data will be decorrelated, which can be used to avoid creation of audio artifacts, to prevent audio artifacts from being generated in a recording studio environment, such as where different microphones are used to record sound from the different parts of a recording sound stage, or in other suitable applications.

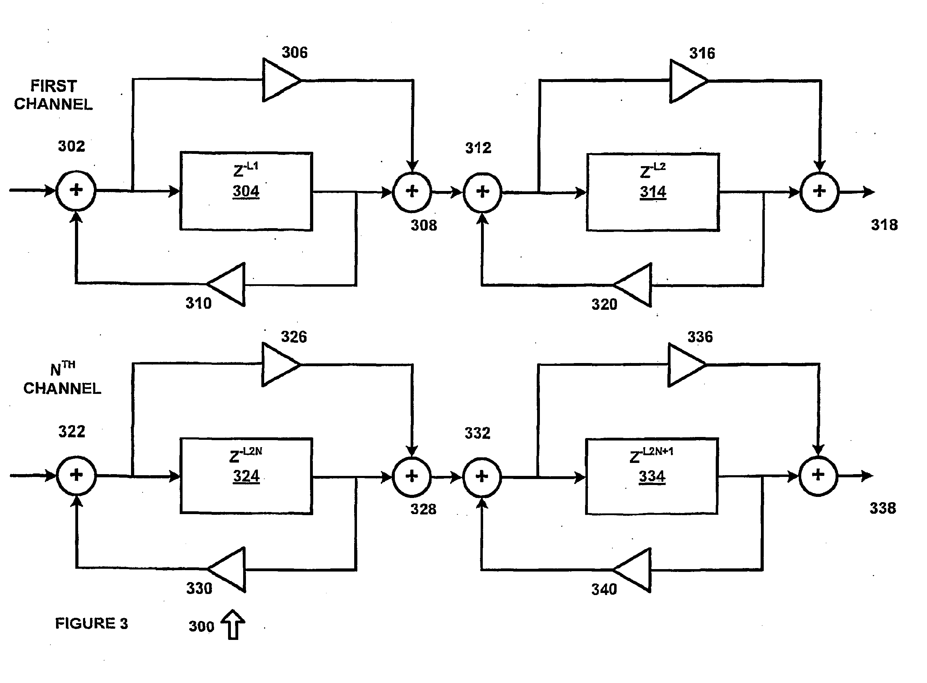

**FIGURE 3** is a diagram of a system 300 for performing sound field widening and phase decorrelation in accordance with an exemplary embodiment of the present invention. System 300 includes a first channel signal processing circuit and an Nth channel signal processing circuit, such that system 300 can be used for stereo, four channel audio, 5.1 channel audio, 7.1 channel audio, 9.1 channel audio or any other suitable numbers of channels.

System 300 includes summation unit 302, gain unit 306, gain unit 310, delay 304, and summation unit 308, which form an all pass filter configuration that may be referred to as a Schroeder section, and which provides an all pass filter of length L1 when the gain factors of gain unit 306 and gain unit 310 are equal and opposite in sign, and which will pass all frequencies but will also add a phase shift depending on the frequency being passed, the delay, and the gain factor of gain unit 306 and gain unit 310. By selecting suitable values for the length of the delay and the gain of gain unit 306 and gain unit 310, the amount of phase shift at each frequency can be controlled. In one exemplary embodiment, by setting the gain of gain unit 306 equal to +0.25 and the gain of gain unit 310 equal to -0.25, the amount of phase shift, such as for audio signals from 0 hertz to 20,000 hertz, will vary in a predetermined manner for a given delay value between -180 degrees to +180 degrees, such that a frequency dependent phase shift will be generated in the processed signal. The delay length L1 can be selected based on a number of sampled signals that are processed and the sample rate. In one exemplary embodiment, digital audio signals that are sampled at a rate of 44.1kHz can be processed, where the length of the delay L1 is equal to the number of samples divided by 44,100, or can alternatively be specified by the integer number of samples processed.

Likewise, a second all pass filter is provided using summation unit 312, gain units 316 and 320, delay 314 with length L2, and summation unit 318. The phase modified signal received from the first all pass filter is then modified by the second all pass filter, which has different phase shift characteristics based on the delay length L2 and the amplitude settings of gain units 316 and 320.

Likewise, for the Nth channel processing chain, summation units 322 and 328, gain units 326 and 330, and delay 324 are used to form a first all pass filter having a delay length of 2N, and summation units 332 and 338, gain units 336 and 340, and delay 334 are used to form a second all pass filter having a delay length of 2N+1. The delay length of delay 324 and 334 are different from the delay length of delays 304 and 314, but the total delay for each filter chain is equal, such that the total delay length of delay 304 and 314 equals the total delay length of delay 324 and 334. In this manner, sound being processed from the first channel to the Nth channel will be phase shifted so as to eliminate any inadvertent phase correlation and thus widen the perceived sound field where the sound is being provided to speakers, to decorrelate any inadvertent phase correlations and reduce audio artifacts, such as where the sound is being recorded, and for other suitable purposes.

Any suitable all pass filter may be substituted, with proper mathematical treatment, for the Schroeder sections discussed above.

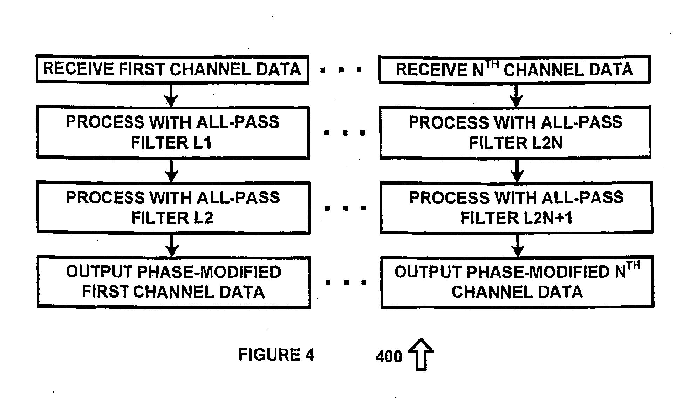

**FIGURE 4** is a diagram of a method 400 for processing a plurality of channels of audio data to decorrelate phase in accordance with an exemplary embodiment of the present invention. Method 400 can be used to widen the sound field or for other suitable purposes related to phase decorrelation, and can be implemented as software on a general purpose processor.

Method 400 begins at steps 402 and 404 in parallel, where a first channel data stream is received at 402 and an Nth channel data stream is received at 404. Likewise, additional channels can also be separately received, so that any suitable number of channels can be processed using method 400.

The method then proceeds to 406 and 408 in parallel, where the first channel data is processed with an all pass filter having a delay length of L1, and the Nth channel data is processed with an all pass filter having a delay length of 2N. Likewise, additional channels can be provided, each channel having a delay length that is different from the delay length of the all pass filter for any other channel. The method then proceeds to 410 and 412 in parallel.

At 410, the first channel data that has been processed with all pass filter L1 is then processed with all pass filter L2, and at 412 the Nth channel data that has been processed with all pass filter L2N is processed with all pass filter L2N+1. Likewise, additional channels can each be processed by a corresponding second all pass filter, where the lengths of each of the corresponding second all pass filters are different from the lengths of the other second all pass filters. Nevertheless, the sum of the delay lengths of the first and second all pass filters for any channel of audio data should equal the sum of the delay lengths of the all pass filters for all other channels, so as to avoid loss of synchronization between the channels when real-time processing is performed. When the audio data is being processed for storage, the delay lengths for each filter chain can be different as long as the processed audio data for each channel is subsequently correlated so as to allow the audio data for each of the channels to be synchronized. The method then proceeds to 414 and 416 in parallel.

At 414 and 416, the phase modified first channel data is output and the phase modified Nth channel of data is output. Likewise, additional channels can be output. In this manner, the data can be provided to speakers, so as to generate an audio signal that has an apparent sound field that is wider than the unprocessed audio signal, where phase correlations between frequency bends of each channel can cause the sound field to collapse towards the center. Likewise, the decorrelated audio channels can be recorded for subsequent processing, such as mixing, or other suitable purposes.

In operation, method 400 can be used to decorrelate the phase of channels of data, such as to widen the apparent sound field to a listener, to avoid creation of audio artifacts, or for other suitable purposes. Although two exemplary filter stages are disclosed, additional filter stages can also or alternatively be used where suitable, as long as the delay length of each filter chain is the same for each channel of data.

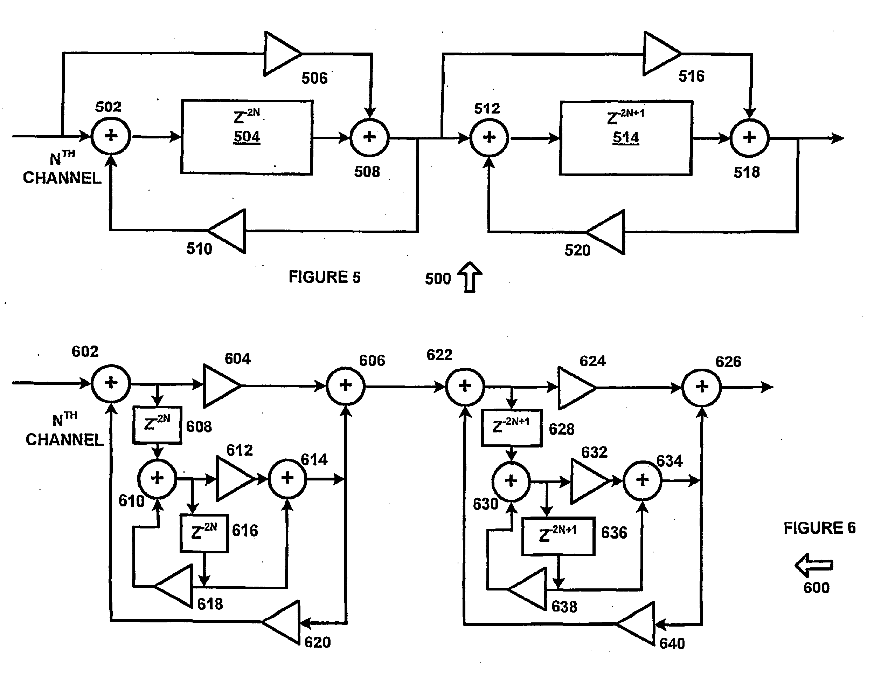

**FIGURE 5** is a diagram of a system 500 for performing phase modification of an audio channel in accordance with an exemplary embodiment of the present invention. System 500 can be implemented in hardware, software, or a suitable combination of hardware and software, and can be one or more software systems operating on a general purpose processing platform.

System 500 includes summation units 502 and 508, gain units 506 and 510 and delay 504, having a length of 2N. Likewise, a second all pass filter unit is comprised of summation units 512 and 518, gain units 516 and 520, and delay 514, having a length of 2N+1. Although a single Nth channel filter chain is shown, a suitable number of channels can be selected, as long as each have a total delay length that is equal to the delay length of each other filter chain, but where the length of any individual delay unit 504 and 514 is different from each other delay unit.

In operation, system 500 provides a different architecture for performing stereo or multi channel phase decorrelation. By selecting suitable gain values and different delay lengths, each all pass filter will create phase variations as a function of frequency in the processed signal that are different from the phase variations of the other all pass filters, so as to eliminate unwanted phase correlation. System 500 can be used for sound field widening, elimination of audio artifacts, or other suitable purposes. Additional filters can also or alternatively be added to the filter chain, so long as the total delay lengths of all filter chains are equal.

**FIGURE 6** is a diagram of a system 600 for performing phase decorrelation and sound field widening in accordance with an exemplary embodiment of the present invention. System 600 utilizes a very long cascade of second order all pass filters, and can be implemented in hardware, software, or a suitable combination of hardware and software, and can be one or more software systems operating on a general purpose processing platform. Other suitable forms of all pass filters can also be substituted, with proper mathematical treatment, for the Schroder sections. The calculation of the many stages of gain elements for the second-order cascade that will provide useful phase-shift can likewise be developed accordingly.

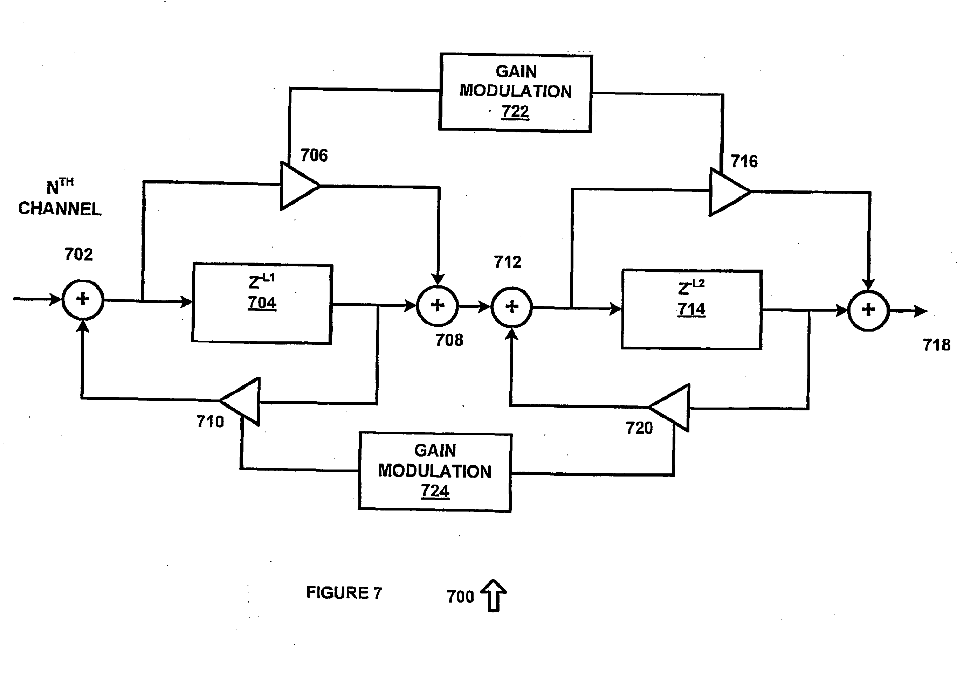

**FIGURE 7** is a diagram of a system 700 for sound field widening and phase decorrelation with gain modulation in accordance with an exemplary embodiment of the present invention.

System 700 includes summation unit 702, gain unit 706, gain unit 710, delay 704, and summation unit 708, which form an all pass filter configuration that may be referred to as a Schroeder section, and which provides an all pass filter of length L1 when the gain factors of gain unit 706 and gain unit 710 are equal and opposite in sign, and which will pass all frequencies but will also add a phase shift depending on the frequency being passed, the delay, and the gain factor of gain unit 706 and gain unit 710. Likewise, a second all pass filter is provided using summation unit 712, gain units 716 and 720, delay 714 with length L2, and summation unit 718. The phase modified signal received from the first all pass filter is then modified by the second all pass filter, which has different phase shift characteristics based on the delay length L2 and the amplitude settings, of gain units 716 and 720.

Gain modulation units 722 and 724 are used to change the filter coefficients, such as by ramping them between -.25 and .25 or other suitable values. The coefficients for one pair of gain units are maintained in quadrature with those of the other pair, so as to modulate the decorrelation by a third signal, creating a time-varying change in the phase shifts. This third signal can be a low frequency sine wave, a narrowband noise signal of low frequency, or other suitable signals. In this manner, reflection and cancellation patterns within a room or a listening environment are moved relative to the listener so as to prevent the listener's auditory system from perceiving the cancellations or reflections. While two gain modulation units are shown, a single unit or other suitable numbers of units can also or alternatively be used.

In view of the above detailed description of the present invention and associated drawings, other modifications and variations are apparent to those skilled in the art. It is also apparent that such other modifications and variations may be effected without departing from the scope of the claims.

## Claims

1. A system (100; 300) for decorrelating signals, comprising:
- a first all pass filter (102) having a first delay of length L1 for processing a first signal;
- a second all pass filter (104) having a second delay of length L2 coupled to the first all pass filter (102) and for processing the first signal after processing by the first all pass filter (102);
- a third all pass filter (106) having a third delay of length L3 for processing a second signal;
- a fourth all pass filter (108) having a fourth delay of length L4 coupled to the third all pass filter (106) and for processing the second signal after processing by the third all pass filter (106);
and wherein
- the first delay length L1, the second delay length L2, the third delay length L3 and the fourth delay length L4 are each different from the other such that L1 ≠ L2 ≠ L3 ≠ L4,
**characterized in that**
- the sum of the first delay length L1 and the second delay length L2 is equal to the sum of the third delay length L3 and the fourth delay length L4 such that L1 + L2 = L3 + L4.

2. The system (100; 300) of claim 1, wherein each of the first all pass filter (102), the second all pass filter (104), the third all pass filter (106) and the fourth all pass filter (108) are pole zero filters.

3. The system (300) of claim 1, wherein the first all pass filter (102) comprises:
- a first summation unit (302); a first gain unit (306) coupled to an output of the first summation unit (302); a delay (304) coupled to the output if the first summation unit (302);
- a second summation unit (308) coupled to the delay (304) and the first gain unit (306); and a second gain unit (310) coupled to the delay (304) and the first summation unit (302).

4. The system (100; 300) of claim 1, wherein
- the first delay length L1 has a value that is expressed in a first prime number and the third delay length L3 has a value is expressed in a third prime number, wherein the first prime number and the third prime number constitute a first prime pair, and
- the second delay length L2 has a value that is expressed in a second prime number and the fourth delay length L4 has a value that is expressed in a fourth prime number, wherein the second prime number and the fourth prime number constitute a second prime pair.

5. The system (100; 300) of claim 1, further comprising
- one or more additional all pass filters coupled to the second all pass filter (104), each having a unique delay length, and
- one or more additional all pass filters coupled to the fourth all pass filter (108), each of the all pass filters having a unique delay length, wherein the total delay of the first all pass filter (102), the second all pass filter (104) and the one or more additional all pass filters coupled to the second all pass filter (104) is equal to the total delay of the third all pass filter (106), the fourth all pass filter (108), and the one or more additional filters coupled to the fourth all pass filter (108).

6. The system (100; 300) of claim 1, wherein each of the first all pass filter (102), the second all pass filter (104), the third all pass filter (106) and the fourth all pass filter (108) are first order filters.

7. The system (100; 300) of claim 1, wherein each of the first all pass filter (102), the second all pass filter (104), the third all pass filter (106) and the fourth all pass filter (108) are digital filters.

8. The system (100; 300) of claim 1, further comprising a phase shift modulator modulating a gain of one of the all pass filters in quadrature with a gain of another of the all pass filters.

9. A method (400) for processing a plurality of signals comprising:
- processing a first wide band audio signal with a first all pass filter chain to generate a phase shift in the first wide band audio signal that has a first phase variation as a function of frequency;
- processing a second wide band audio signal with a second all pass filter chain to generate a phase shift in the second wide band audio signal that has a second phase variation as a function of frequency;
wherein
- both phase variations vary no more than +180 degrees;
and wherein processing the first wide band audio signal with the first all pass filter chain comprises:
- processing the first wide band audio signal with a first all pass filter (102) having a first delay length L1; and
- processing the first wide band audio signal with a second all pass filter (104) having a second delay length L2 after processing with the first all pass filter (102),
and wherein processing the second wide band audio signal with the second all pass filter chain comprises:
- processing the second wide band audio signal with a third all pass filter (106) having a third delay length L3; and
- processing the second wide band audio signal with a fourth all pass filter (108) having a fourth delay length L4 after processing with the third all pass filter (106),
wherein
- the first delay length L1, the second delay length L2, the third delay length L3 and the fourth delay length L4 are each different from the other such that L1 ≠ L2 ≠ L3 ≠ L4,
**characterized in that**
- the sum of the first delay length L1 and the second delay length L2 is equal to the sum of the third delay length L3 and the fourth delay length L4 such that L1 + L2 = L3 + L4.

10. The method (400) of claim 9, wherein
- the first delay length has a value that is expressed in a first prime number and the third delay length has a value is expressed in a third prime number, wherein the first prime number and the third prime number constitute a first prime pair, and
- the second delay length has a value that is expressed in a second prime number and the fourth delay length has a value that is expressed in a fourth prime number, wherein the second prime number and the fourth prime number constitute a second prime pair.

11. The method (400) of claim 9, wherein the first all pass filter (102) and the second all pass filter (104) are first order all pass filters.

12. The method (400) of claim 9, wherein the first all pass filter constitutes a first Schroeder section and the second all pass filter constitutes a second Schroeder section.

13. The method (400) of claim 9, further comprising modulating a gain of one of the all pass filters in quadrature with a gain of another of the all pass filters.

## Patentansprüche

1. System (100; 300) zur Dekorrelation von Signalen, umfassend:
- ein erstes Allpassfilter (102) mit einer ersten Verzögerung der Länge L1 zur Verarbeitung eines ersten Signals;
- ein zweites Allpassfilter (104) mit einer zweiten Verzögerung der Länge L2, das mit dem ersten Allpassfilter (102) gekoppelt ist und zur Verarbeitung des ersten Signals nach Verarbeitung durch das erste Allpassfilter (102) dient;
- ein drittes Allpassfilter (106) mit einer dritten Verzögerung der Länge L3 zur Verarbeitung eines zweiten Signals;
- ein viertes Allpassfilter (108) mit einer vierten Verzögerung der Länge L4, das mit dem dritten Allpassfilter (106) gekoppelt ist und zur Verarbeitung des zweiten Signals nach Verarbeitung durch das dritte Allpassfilter (106) dient;
und wobei
- die erste Verzögerungslänge L1, die zweite Verzögerungslänge L2, die dritte Verzögerungslänge L3 und die vierte Verzögerungslänge L4 jeweils voneinander verschieden sind, so dass L1≠L2≠L3≠L4,
**dadurch gekennzeichnet, dass**
- die Summe der ersten Verzögerungslänge L1 und der zweiten Verzögerungslänge L2 gleich der Summe der dritten Verzögerungslänge L3 und der vierten Verzögerungslänge L4 ist, so dass L1+L2 = L3+L4.

2. System (100; 300) nach Anspruch 1, wobei das erste Allpassfilter (102), das zweite Allpassfilter (104), das dritte Allpassfilter (106) und das vierte Allpassfilter (108) jeweils Pol-Nullstellen-Filter sind.

3. System (300) nach Anspruch 1, wobei das erste Allpassfilter (102) Folgendes umfasst:
- eine erste Summiereinheit (302); eine erste Verstärkungseinheit (306), die mit einem Ausgang der ersten Summiereinheit (302) gekoppelt ist; eine Verzögerung (304), die mit dem Ausgang der ersten Summiereinheit (302) gekoppelt ist;
- eine zweite Summiereinheit (308), die mit der Verzögerung (304) und der ersten Verstärkungseinheit (306) gekoppelt ist; und eine zweite Verstärkungseinheit (310), die mit der Verzögerung (304) und der ersten Summiereinheit (302) gekoppelt ist.

4. System (100; 300) nach Anspruch 1, wobei
- die erste Verzögerungslänge L1 einen Wert hat, der in einer ersten Primzahl ausgedrückt wird, und die dritte Verzögerungslänge L3 einen Wert hat, der in einer dritten Primzahl ausgedrückt wird, wobei die erste Primzahl und die dritte Primzahl ein erstes Primzahlenpaar bilden, und
- die zweite Verzögerungslänge L2 einen Wert hat, der in einer zweiten Primzahl ausgedrückt wird und die vierte Verzögerungslänge L4 einen Wert hat, der in einer vierten Primzahl ausgedrückt wird, wobei die zweite Primzahl und die vierte Primzahl ein zweites Primzahlenpaar bilden.

5. System (100; 300) nach Anspruch 1, des Weiteren umfassend:
- ein oder mehrere zusätzliche Allpassfilter, die mit dem zweiten Allpassfilter (104) gekoppelt sind, wobei jedes eine einzigartige Verzögerungslänge hat, und
- ein oder mehrere zusätzliche Allpassfilter, die mit dem vierten Allpassfilter (108) gekoppelt sind, wobei jedes der Allpassfilter eine einzigartige Verzögerungslänge hat, wobei die Gesamtverzögerung des ersten Allpassfilters (102), des zweiten Allpassfilters (104) und des einen oder der mehreren zusätzlichen Allpassfilter, die mit dem zweiten Allpassfilter (104) gekoppelt sind, gleich der Gesamtverzögerung des dritten Allpassfilters (106), des vierten Allpassfilters (108) und des einen oder der mehreren zusätzlichen mit dem vierten Allpassfilter (108) gekoppelten Filter ist.

6. System (100; 300) nach Anspruch 1, wobei das erste Allpassfilter (102), das zweite Allpassfilter (104), das dritte Allpassfilter (106) und das vierte Allpassfilter (108) jeweils Filter erster Ordnung sind.

7. System (100; 300) nach Anspruch 1, wobei das erste Allpassfilter (102), das zweite Allpassfilter (104), das dritte Allpassfilter (106) und das vierte Allpassfilter (108) jeweils digitale Filter sind.

8. System (100; 300) nach Anspruch 1, das ferner einen Phasenverschiebungsmodulator umfasst, der eine Verstärkung eines der Allpassfilter mit einer Verstärkung eines anderen der Allpassfilter quadraturmoduliert.

9. Verfahren (400) zur Verarbeitung einer Vielzahl von Signalen, umfassend die folgenden Schritte:
- Verarbeiten eines ersten Breitband-Audiosignals mit einer ersten Allpassfilterkette, um eine Phasenverschiebung in dem ersten Breitband-Audiosignal zu erzeugen, das eine erste Phasenänderung als Funktion der Frequenz hat;
- Verarbeiten eines zweiten Breitband-Audiosignals mit einer zweiten Allpassfilterkette, um eine Phasenverschiebung in dem zweiten Breitband-Audiosignal zu erzeugen, das eine zweite Phasenvariation als Funktion der Frequenz hat;
wobei
- beide Phasenvariationen nicht mehr als +180 Grad variierten;
und wobei die Verarbeitung des ersten Breitband-Audiosignals mit der ersten Allpassfilterkette folgende Schritte umfasst:
- Verarbeiten des ersten Breitband-Audiosignals mit einem ersten Allpassfilter (102) mit einer ersten Verzögerungslänge L1; und
- Verarbeiten des ersten Breitband-Audiosignals mit einem zweiten Allpassfilter (104) mit einer zweiten Verzögerungslänge L2 nach Verarbeitung mit dem ersten Allpassfilter (102),
und wobei die Verarbeitung des zweiten Breitband-Audiosignals mit der zweiten Allpassfilterkette folgende Schritte umfasst:
- Verarbeiten des zweiten Breitband-Audiosignals mit einem dritten Allpassfilter (106) mit einer dritten Verzögerungslänge L3; und
- Verarbeiten des zweiten Breitband-Audiosignals mit einem vierten Allpassfilter (108) mit einer vierten Verzögerungslänge L4 nach Verarbeitung mit dem dritten Allpassfilter (106),
wobei
- die erste Verzögerungslänge L1, die zweite Verzögerungslänge L2, die dritte Verzögerungslänge L3 und die vierte Verzögerungslänge L4 jeweils voneinander verschieden sind, so dass L1≠L2≠L3≠L4,
**dadurch gekennzeichnet, dass**
- die Summe der ersten Verzögerungslänge L1 und der zweiten Verzögerungslänge L2 gleich der Summe der dritten Verzögerungslänge L3 und der vierten Verzögerungslänge L4 ist, so dass L1+L2 = L3+L4.

10. Verfahren (400) nach Anspruch 9, wobei
- die erste Verzögerungslänge einen Wert hat, der in einer ersten Primzahl ausgedrückt wird, und die dritte Verzögerungslänge einen Wert hat, der in einer dritten Primzahl ausgedrückt wird, wobei die erste Primzahl und die dritte Primzahl ein erstes Primzahlenpaar bilden, und
- die zweite Verzögerungslänge einen Wert hat, der in einer zweiten Primzahl ausgedrückt wird und die vierte Verzögerungslänge einen Wert hat, der in einer vierten Primzahl ausgedrückt wird, wobei die zweite Primzahl und die vierte Primzahl ein zweites Primzahlenpaar bilden.

11. Verfahren (400) nach Anspruch 9, wobei das erste Allpassfilter (102) und das zweite Allpassfilter (104) Allpassfilter erster Ordnung sind.

12. Verfahren (400) nach Anspruch 9, wobei das erste Allpassfilter ein erstes Schröder-Segment bildet und das zweite Allpassfilter ein zweites Schröder-Segment bildet.

13. Verfahren (400) nach Anspruch 9, bei dem ferner eine Verstärkung eines der Allpassfilters mit einer Verstärkung eines anderen der Allpassfilter quadraturmoduliert wird.

## Revendications

1. Système (100 ; 300) pour décorréler des signaux, comprenant :
- un premier filtre passe-tout (102) possédant un premier retard de longueur L1 pour traiter un premier signal ;
- un deuxième filtre passe-tout (104) possédant un deuxième retard de longueur L2 couplé au premier filtre passe-tout (102) et pour traiter le premier signal après le traitement par le premier filtre passe-tout (102) ;
- un troisième filtre passe-tout (106) possédant un troisième retard de longueur L3 pour traiter un second signal ;
- un quatrième filtre passe-tout (108) possédant un quatrième retard de longueur L4 couplé au troisième filtre passe-tout (106) et pour traiter le second signal après le traitement par le troisième filtre passe-tout (106) ;
et dans lequel
- la longueur de premier retard L1, la longueur de deuxième retard L2, la longueur de troisième retard L3 et la longueur de quatrième retard L4 sont chacune différentes de l'autre de sorte que L1 ≠ L2 ≠ L3 ≠ L4,
**caractérisé en ce que**
- la somme de la longueur de premier retard L1 et de la longueur de deuxième retard L2 est égale à la somme de la longueur de troisième retard L3 et de la longueur de quatrième retard L4 de sorte que L1 + L2 = L3 + L4.

2. Système (100 ; 300) selon la revendication 1, dans lequel chacun parmi le premier filtre passe-tout (102), le deuxième filtre passe-tout (104), le troisième filtre passe-tout (106) et le quatrième filtre passe-tout (108) est un filtre pôle-zéro.

3. Système (300) selon la revendication 1, dans lequel le premier filtre passe-tout (102) comprend :
- une première unité de sommation (302) ; une première unité de gain (306) couplée à une sortie de la première unité de sommation (302) ; un retard (304) couplé à la sortie de la première unité de sommation (302) ;
- une seconde unité de sommation (308) couplée au retard (304) et à la première unité de gain (306) ; et une deuxième unité de gain (310) couplée au retard (304) et à la première unité de sommation (302).

4. Système (100 ; 300) selon la revendication 1, dans lequel
- la longueur de premier retard L1 possède une valeur qui est exprimée en un premier nombre premier et la longueur de troisième retard L3 possède une valeur qui est exprimée en un troisième nombre premier, dans lequel le premier nombre premier et le troisième nombre premier constituent une première paire de nombres premiers, et
- la longueur de deuxième retard L2 possède une valeur qui est exprimée en un deuxième nombre premier et la longueur de quatrième retard L4 possède une valeur qui est exprimée en un quatrième nombre premier, dans lequel le deuxième nombre premier et le quatrième nombre premier constituent une seconde paire de nombres premiers.

5. Système (100 ; 300) selon la revendication 1, comprenant en outre
- un ou plusieurs filtres passe-tout supplémentaires couplés au deuxième filtre passe-tout (104), possédant chacun une longueur de retard unique, et
- un ou plusieurs filtres passe-tout supplémentaires couplés au quatrième filtre passe-tout (108), chacun parmi les filtres passe-tout possédant une longueur de retard unique, dans lequel le retard total du premier filtre passe-tout (102), du deuxième filtre passe-tout (104) et du ou des filtres passe-tout supplémentaires couplés au deuxième filtre passe-tout (104) est égal au retard total du troisième filtre passe-tout (106), du quatrième filtre passe-tout (108), et du ou des filtres supplémentaires couplés au quatrième filtre passe-tout (108).

6. Système (100 ; 300) selon la revendication 1, dans lequel chacun parmi le premier filtre passe-tout (102), le deuxième filtre passe-tout (104), le troisième filtre passe-tout (106) et le quatrième filtre passe-tout (108) est un filtre de premier ordre.

7. Système (100 ; 300) selon la revendication 1, dans lequel chacun parmi le premier filtre passe-tout (102), le deuxième filtre passe-tout (104), le troisième filtre passe-tout (106) et le quatrième filtre passe-tout (108) est un filtre numérique.

8. Système (100 ; 300) selon la revendication 1, comprenant en outre un modulateur déphaseur modulant un gain d'un des filtres passe-tout en quadrature avec un gain d'un autre des filtres passe-tout.

9. Procédé (400) pour traiter une pluralité de signaux, comprenant :
- le traitement d'un premier signal audio à large bande avec une première chaîne de filtres passe-tout pour générer un déphasage dans le premier signal audio à large bande qui possède une première variation de phase en fonction de la fréquence ;
- le traitement d'un second signal audio à large bande avec une seconde chaîne de filtres passe-tout pour générer un déphasage dans le second signal audio à large bande qui possède une seconde variation de phase en fonction de la fréquence ; dans lequel
- les deux variations de phase ne varient pas de plus de +180 degrés ;
et dans lequel le traitement du premier signal audio à large bande avec la première chaîne de filtres passe-tout comprend :
- le traitement du premier signal audio à large bande avec un premier filtre passe-tout (102) possédant une première longueur de retard L1 ; et
- le traitement du premier signal audio à large bande avec un deuxième filtre passe-tout (104) possédant une deuxième longueur de retard L2 après le traitement avec le premier filtre passe-tout (102),
et dans lequel le traitement du second signal audio à large bande avec la seconde chaîne de filtres passe-tout comprend :
- le traitement du second signal audio à large bande avec un troisième filtre passe-tout (106) possédant une troisième longueur de retard L3 ; et
- le traitement du second signal audio à large bande avec un quatrième filtre passe-tout (108) possédant une quatrième longueur de retard L4 après le traitement avec le troisième filtre passe-tout (106),
dans lequel
- la longueur de premier retard L1, la longueur de deuxième retard L2, la longueur de troisième retard L3 et la longueur de quatrième retard L4 sont chacune différentes de l'autre de sorte que L1 ≠ L2 ≠ L3 ≠ L4,
**caractérisé en ce que**
- la somme de la longueur de premier retard L1 et de la longueur de deuxième retard L2 est égale à la somme de la longueur de troisième retard L3 et de la longueur de quatrième retard L4 de sorte que L1 + L2 = L3 + L4.

10. Procédé (400) selon la revendication 9, dans lequel
- la longueur de premier retard possède une valeur qui est exprimée en un premier nombre premier et la longueur de troisième retard possède une valeur qui est exprimée en un troisième nombre premier, dans lequel le premier nombre premier et le troisième nombre premier constituent une première paire de nombres premiers, et
- la longueur de deuxième retard possède une valeur qui est exprimée en un deuxième nombre premier et la longueur de quatrième retard possède une valeur qui est exprimée en un quatrième nombre premier, dans lequel le deuxième nombre premier et le quatrième nombre premier constituent une seconde paire de nombres premiers.

11. Procédé (400) selon la revendication 9, dans lequel le premier filtre passe-tout (102) et le deuxième filtre passe-tout (104) sont des filtres passe-tout de premier ordre.

12. Procédé (400) selon la revendication 9, dans lequel le premier filtre passe-tout constitue une première section de Schroeder et le deuxième filtre passe-tout constitue une seconde section de Schroeder.

13. Procédé (400) selon la revendication 9, comprenant en outre la modulation d'un gain d'un des filtres passe-tout en quadrature avec un gain d'un autre des filtres passe-tout.
